Europäisches Patentamt

European Patent Office

Office européen des brevets

(11) Veröffentlichungsnummer: **0 082 439**
**B1**

(12) # EUROPÄISCHE PATENTSCHRIFT

(45) Veröffentlichungstag der Patentschrift:
12.10.88

(21) Anmeldenummer: 82111466.7

(22) Anmeldetag: 10.12.82

(51) Int. Cl.⁴: **G 01 F 11/26,** B 65 D 25/52,
B 65 D 47/06

(54) **Dosierverschluss für Behälter für flüssige oder rieselfähige Produkte.**

(30) Priorität: 19.12.81 DE 3150465

(43) Veröffentlichungstag der Anmeldung:
29.06.83 Patentblatt 83/26

(45) Bekanntmachung des Hinweises auf die Patenterteilung:
12.10.88 Patentblatt 88/41

(84) Benannte Vertragsstaaten:
AT BE CH DE FR GB IT LI LU NL SE

(56) Entgegenhaltungen:
DE-A-2 802 210
FR-A-1 404 641
FR-A-2 274 901
FR-A-2 360 872
US-A-1 859 109
US-A-2 091 929
US-A-2 760 692

(73) Patentinhaber: **Henkel Kommanditgesellschaft auf
Aktien, Postfach 1100 Henkelstrasse 67, D-4000
Düsseldorf- Holthausen (DE)**

(72) Erfinder: **vom Hofe, Dieter, Uedesheimerweg 2,
D-5000 Köln 71 (DE)**

## Beschreibung

Die Erfindung betrifft einen Dosierverschluß für Behälter für flüssige oder rieselfähige Produkte mit einem auf die Behälteröffnung aufzusetzenden Deckel mit integriertem Ausgießstutzen und einer den Deckel umfassenden Dosierkappe mit durch eine etwa axial verlaufende Trennwand in eine Vordosierkammer mit darin mündendem Ausgießstutzen und eine in eine Austrittsöffnung mündende Austrittskammer unterteiltem becherförmigen Innenraum.

Ein derartiger Dosierverschluß ist aus der US-A-2 091 929 bekannt. Bei diesem Verschluß ist es jedoch notwendig, neben dem Deckel und der Dosierkammer weitere Dicht-, Pass- oder Sitzelemente vorzusehen. Dies verursacht eine relativ aufwendige Handhabung des Verschlusses beim Aufsatz auf die zu verschließende Flasche. Insbesondere ist es hierbei nicht möglich, den Verschluß soweit vorkonfektioniert herzurichten, daß er in einem Arbeitsgang auf die zu verschließende Flasche oder den Behälter aufzubringen ist.

Aus der FR-A-1 404 641 ist ein als Dosierwanne ausgebildeter Dosierverschluß bekannt, der klemmend in der Öffnung von Flaschen angebracht ist. Dieser Verschluß ist einteilig ausgebildet und daher kunststofftechnisch nur sehr schwer herstellbar.

Ein weiterer Dosierverschluß, dem die Zuordnung von Vordosierkammer mit darin mündendem Ausgießstutzen und Austrittskammer mit Austrittsöffnung zu entnehmen ist, ist aus der FR-A-2 360 872 bekannt.

Als Dosierverschlüsse werden auch sogenannte Meßbecher-Verschlüsse auf die Ausgießöffnung vieler Behälter, wie Kunststoffflaschen oder -kanister, gesetzt. Wie der Name schon sagt, dienen solche Behälterverschlüsse als Meßgefäß zum Dosieren des im Behälter verpackten Produkts. Das Strichvoll-Volumen gängiger Verschlüsse dieser Art beträgt bei einem Durchmesser von 35 bis 52 mm und einer Höhe von 40 bis 70 mm des Bechers etwa 30 bis 100 ml. Das entsprechende Materialeinsatzgewicht liegt bei ca. 5 bis 15 Gramm Polyäthylen oder dergleichen.

Für eine ausreichende Dichtwirkung des Meßbechers bei Verwendung als Verschlußklappe ist es erforderlich, daß die Ausgießöffnung des Behälters bis an den Becherboden heranreicht. Dieser relativ lange und für den Behälter und dessen Handhabung an sich überflüssige Hals der Ausgießöffnung erfordert zusätzliches Material in der Größenordnung von ca. 2 bis 10 Gramm Polyäthylen oder dergleichen pro Einheit. Der Meßbecherverschluß bedingt also eine sich aus der Umfangsfläche von Meßbecher und Ausgießöffnung ergebende Doppelwandigkeit zum Umhüllen eines Volumens von ca. 30 bis 100 ml und damit je nach Größe und Material einen Materialverbrauch von ca. 7 bis 25 g des Kunststoffs.

Meßbecherverschlüsse sind zwangsläufig mit Abschrauben, Eindosieren, Ausspülen des Verschlusses nach Gebrauch und Zuschrauben verbunden. Dieser umständliche Vorgang veranlaßt viele Verwender, undosiert zu portionieren. Eine Über- oder Unterdosierung kann jedoch, z. B. bei Pflanzenschutz- oder Desinfektionsmitteln, zu unerwünschten Folgen führen.

Bekannt sind ferner sogenannte Kugeldosierer für Flüssigkeiten; solche unterschiedliche Systeme werden in der DE-PS-2 619 990 und im DE-GM-7 810 073 beschrieben. Die bekannten Dosierer erfordern jeweils fünf getrennte Bauteile, zu denen sogar eine bewegliche Kugel zum Verschließen des Dosierraums nach dem Dosieren zählt. In der Regel lassen die Kugeldosierer eine Dosierung nach Maß nicht zu, d.h. sie können nur jeweils eine einzige bestimmte Menge dosieren. Nach Aufwand und Handhabung sind solche Dosierer für den Ersatz üblicher Meßbecherverschlüsse nicht geeignet.

Der Erfindung liegt die Aufgabe zugrunde, einen Dosierverschluß für Behälter zu schaffen, der einfach, insbesondere vorkonfektioniert auf den Behälter montierbar und mit geringerem Materialeinsatz herstellbar ist, darüber hinaus ein exaktes Dosieren sowohl von flüssigen als auch von rieselfähigen Produkten ermöglicht und in der Anwendung für den Verbraucher wesentlich unbequeme Handhabungen nicht verlangt, sowie insbesondere eine völlige Restentleerung des Behälters gewährleistet.

Bei einem Dosierverschluß der eingangs bezeichneten Art wird diese Aufgabe gemäß der Erfindung dadurch gelöst, daß der Deckel als in die Behälteröffnung hineinragende Dosierwanne ausgebildet ist, welche einen die Behälteröffnung dichtend umfassenden Rand mit Kupplungsmitteln und einen umlaufenden Bund zur dichtenden Aufnahme der Dosierkappe mit Dosierskala aufweist, und daß im Randbereich der Dosierwanne zur völligen Restentleerung des Behälters eine Ausbuchtung ausgebildet ist, von welcher der Ausgießstutzen ausgeht, und daß das Fassungsvermögen der Dosierwanne mindestens ebenso groß ist wie dasjenige der Vordosierkammer.

Aufgrund dieser Ausbildung ergeben sich insbesondere die Vorteile, daß der erfindungsgemäße Dosierverschluß aus nur zwei Teilen vorzukonfektionieren ist, die ohne die Gefahr eines zufälligen Lösens dichtend auf der Behälteröffnung zu befestigen sind. Ferner sind die beiden Teile des Dosierverschlusses relativ dünnwandig herzustellen, da die Dosierwanne recht stabil in der Behälteröffnung gefaßt ist und die Dosierkappe mit dem umlaufenden Bund der Dosierwanne verbunden ist. Hierdurch braucht durch die Dosierkappe keine Kraftübertragung auf die Dosierwanne ausgeübt werden, welche den dichtenden Sitz der Dosierwanne auf der Behälteröffnung beeinträchtigen würde, wie dies beispielsweise bei der Dosierkappe nach der US-A-2 091 929 der Fall ist.

Die Trennwand verläuft bei aufrecht stehendem Dosierverschluß bzw. Behälter im wesentlichen vertikal. Durch die erfindungsgemäße Ausbildung des Dosierverschlusses wird eine Kürzung der Ausgießöffnung des Behälters auf ein für die Handhabung des Behälters ausreichendes Mindestmaß erreicht. Auch die Handhabung des Dosierverschlusses ist denkbar einfach, da für jeden Dosiervorgang lediglich ein Hin- und Herkippen des Behälters mit aufgesetztem Verschluß erforderlich ist.

Vorteilhafte Weiterbildungen der Erfindung sind in den abhängigen Ansprüchen beschrieben.

Anhand der schematischen Darstellung in der Zeichnung werden weitere Einzelheiten der Erfindung erläutert. Es zeigen:

Fig. 1 den Dosierverschluß im Schnitt;
Fig. 2 den Dosierverschluß in der Ansicht von unten;
Fig. 3 eine Seitenansicht des Dosierverschlusses;
Fig. 4 eine Ansicht von oben auf den Dosierverschluß; und
Fig. 5 eine Vorderansicht des Dosierverschlusses.

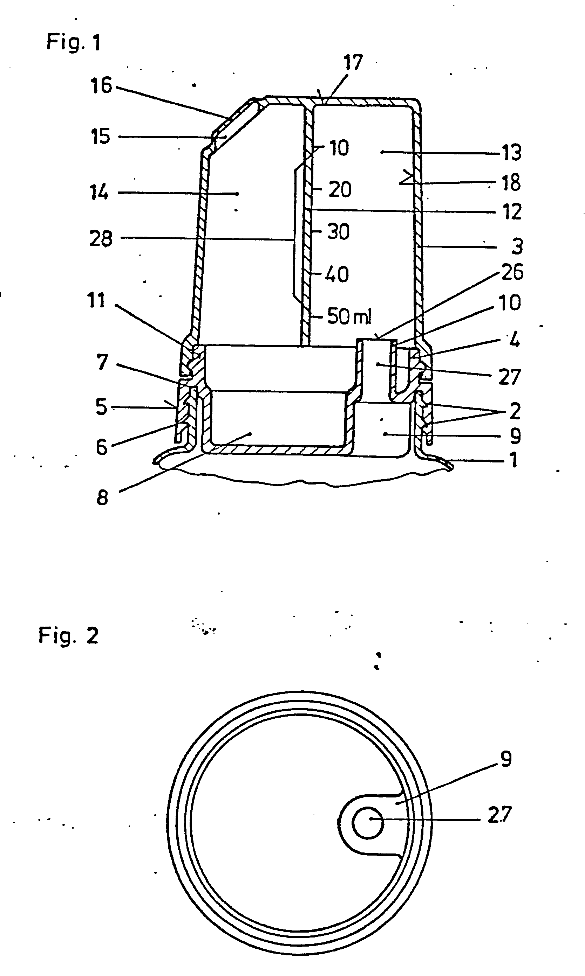

In Fig. 1 wird im Schnitt die Ausgießöffnung 1 eines im übrigen nicht gezeichneten Behälters dargestellt. Die Ausgießöffnung kann mit einem Gewinde oder mit ganz oder teilweise umlaufenden Schnappwülsten 2 versehen sein. Auf die Schnappwülste 2 wird im Ausführungsbeispiel der erfindungsgemäße Dosierverschluß aufgeprellt. Dieser besteht aus einer Dosierkappe 3 als Oberteil und einer Dosierwanne 4 als Unterteil.

Das Unterteil bzw. die Dosierwanne 4 des Dosierverschlusses besitzt einen umlaufenden Rand 5, welcher an der Innenseite Gewindegänge oder Schnapprillen 6 zum Befestigen an der Ausgießöffnung 1 besitzt. Diese wird beispielsweise in eine am Rand der Dosierwanne 4 umlaufende Hohlkehle 7 eingeklemmt. Die Dosierwanne 4 ragt dann mit ihrem Boden 8 in die Ausgießöffnung 1 hinein. Der Boden 8 besitzt einseitig eine Aussparung bzw. Ausbuchtung 9, die in einen rohrförmigen Stutzen 10 übergeht. Eine Ansicht von unten der Dosierwanne 4 von Fig. 1 wird in Fig. 2 dargestellt.

Die Dosierkappe 3 wird dicht und gegen zufälliges Lösen gesichert, vorzugsweise unlösbar, mit einem umlaufenden Bund 11 der Dosierwanne 4, z. B. durch Schweißen, Kleben oder Schnappen, verbunden.

Die Dosierkappe 3 wird innen durch eine Trennwand 12 in eine Vordosierkammer 13 und eine Austrittskammer 14 unterteilt. Letztere besitzt eine Austrittsöffnung 15, welche bis zur Anwendung durch eine abzuschneidende, dünnwandige Membran 16 verschlossen sein kann. Die Trennwand 12 wird dichtend an den Becherboden 17 und an die Becherwandung 18 angeformt, an der Dosierwanne 4 zugewandten Becheroberseite sind die Becherkammern, d.h. die Vordosierkammer 13 und die Austrittskammer 14, dagegen offen.

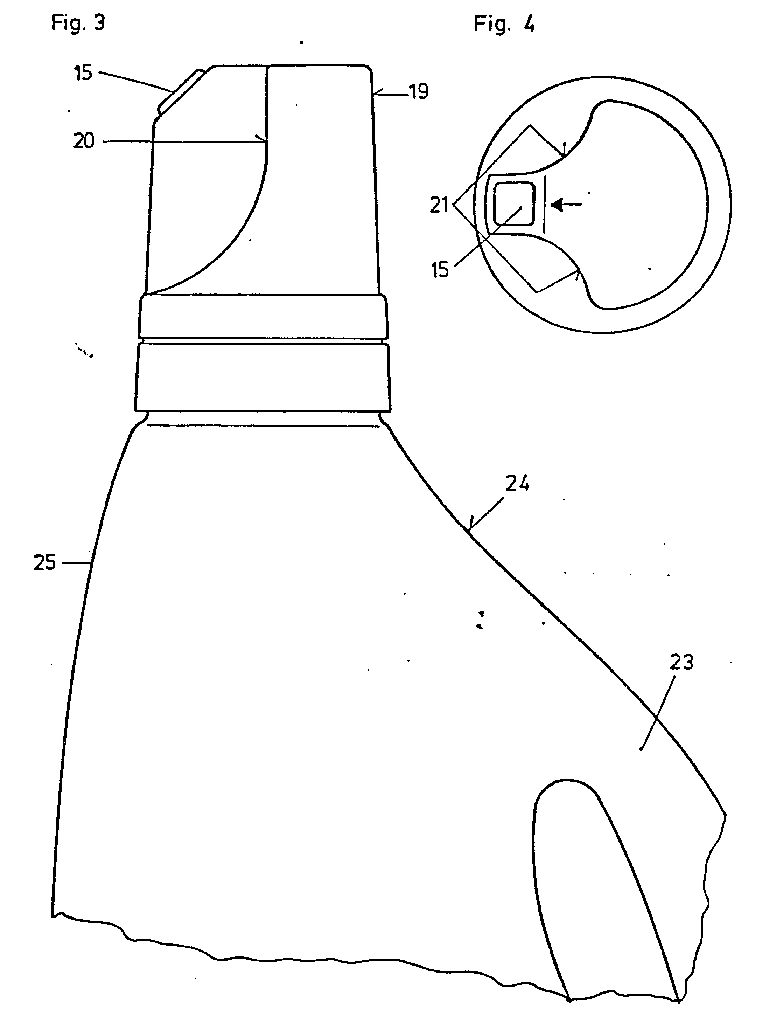

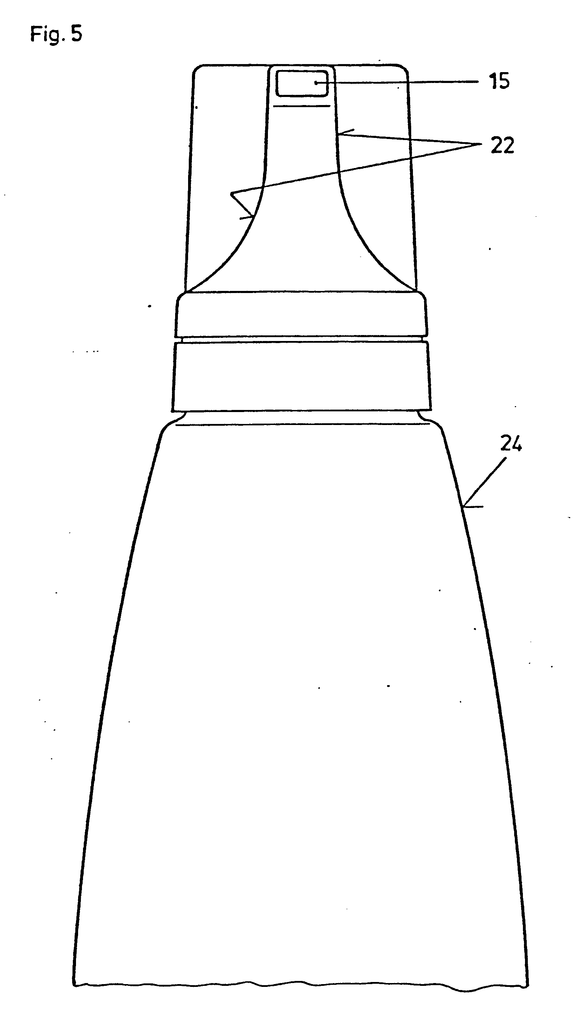

Die Dosierkappe 3 kann beispielsweise die in den Fig. 3 bis 5 angegebene Form besitzen. Gemäß Zeichnung wird die sonst leicht konische, zylindrische Außenkontur 19 entlang der Linien 20, 21 und 22 derart nach innen verzogen, daß sich zur Ausgießöffnung 15 hin eine schnutenförmige, dem Ausgießer von Kaffeekannen ähnliche Verengung ergibt. Durch diese Formgebung wird dem Anwender ein genaues, gezieltes Ausgießen erleichtert und die innere Austrittskammer 14 erhält eine ein schnelles Ausbringen des vordosierten Produkts ermöglichende, strömungstechnisch günstige Formgebung. Ferner ermöglicht die Außenkontur gemäß Fig. 3 bis 5 der Dosierkappe ein orientiertes Aufbringen des Verschlusses auf die Mündung einer Verpackung, so daß beispielsweise bei einer mit einem Griff 23 versehenen Flasche 24 gemäß Fig. 3 die Austrittsöffnung 15 gezielt auf die dem Griff 23 gegenüberliegende Flaschenseite 25 zu bringen ist. Schließlich bewirkt die Formgebung der Dosierkappe 3 eine Versteifung, derart, daß die Kappe im Sinne der angestrebten Materialersparnis relativ dünnwandig herzustellen ist.

Für die Funktion des Dosierverschlusses ist es auch notwendig bzw. vorteilhaft, wenn das Fassungsvermögen der Dosierwanne 4 mindestens gleich groß ist wie dasjenige der Vordosierkammer 13 bzw. wenn die Oberkante 26 des Stutzens 10 mindestens etwa 1 mm in die Vordosierkammer 13 hineinragt. Hierdurch wird erreicht, daß nach dem Füllen der Vordosierkammer 13 aus dem Stutzen 10 und anschließendem Kippen des Behälters der Inhalt der Vordosierkammer 13 in der Dosierwanne 4 Platz findet, ohne daß die Gefahr eines Zurückfließens über den Stutzen 10 besteht.

Weiterhin soll der lichte Durchmesser 27 des Stutzens 10 der Fließfähigkeit des zu dosierenden Produkts entsprechend ausgelegt werden, d.h. der lichte Durchmesser 27 bzw. der Durchlaßquerschnitt des Stutzens 10 soll um so kleiner sein, je dünnflüssiger das Produkt ist. Die Füllzeit der Dosierkammer 13 hängt dann im wesentlichen nicht von der Fließfähigkeit des zu dosierenden Produkts ab. Weiterhin sollen die Durchlaßquerschnitte von in der Dosierwanne 4 vorgesehenem Ausgießstutzen 10 und Austrittsöffnung 15 der Dosierkappe 3 in Abstimmung mit dem zu dosierenden Produkt im Sinne einer deutlich größeren Durchflußmenge an der Austrittsöffnung 15 als an dem Ausgießstutzen 10 sein. Auf diese Weise ist es dem Anwender möglich, eine exakte Produktdosierung mit Hilfe einer, z. B. an der Trennwand 12 anzubringenden, Dosierskala 28 vorzunehmen.

Weiterhin ist es vorteilhaft, wenn die Dosierkappe 3 aus transparentem bzw. zumindest transluzentem Material besteht. Dadurch wird das Dosieren erleichtert, insbesondere kann innerhalb der Kappe eine Dosierskala 28 auf der Trennwand 12 angebracht werden, und der Anwender kann schon optisch beim Kauf das Vorhandensein einer Dosiervorrichtung erkennen.

Um bei relativ kleinen Gebinden relativ große Dosiervolumina zu realisieren und z. B. eine 2-1-Flasche mit 50- oder 80-ml-Dosierverschluß zu schaffen, kann die Trennwand 12 auch in die Dosierwanne 4 hinein verlängert und damit die Dosierkammer 13 vergrößert werden. Gleichzeitig soll dann die Dosierwanne 4 ins Behälterinnere hinein, also nach unten, vertieft werden, so daß die Dosierwanne 4 und die Dosierkammer 13 wieder etwa gleiche Füllvolumina erhalten. Besonders in diesem Falle garantiert die Ausbuchtung 9 der Dosierwanne 4 eine völlige Restentleerung des Behälters.

**Bezugszeichenliste**

| | | |
|---|---|---|
| 1 | = | Ausgießöffnung |
| 2 | = | Schnappwulst |
| 3 | = | Dosierkappe |
| 4 | = | Dosierwanne |
| 5 | = | umlaufender Rand |
| 6 | = | Schnappwulst |
| 7 | = | Hohlkehle |
| 8 | = | Boden (4) |
| 9 | = | Ausbuchtung |
| 10 | = | Stutzen |
| 11 | = | umlaufender Bund |
| 12 | = | Trennwannd |
| 13 | = | Vordosierkammer |
| 14 | = | Austrittskammer |
| 15 | = | Austrittsöffnung |
| 16 | = | Membran |
| 17 | = | Becherboden |
| 18 | = | Bechervand |
| 19 | = | Außenkontur |
| 20) 21) 22) | = | Linien |
| 23 | = | Griff |
| 24 | = | Flasche |
| 25 | = | Flaschenseite |
| 26 | = | Oberkante |
| 27 | = | Durchmesser |
| 28 | = | Dosierskala |

**Patentansprüche**

1. Dosierverschluß für Behälter für flüssige oder rieselfähige Produkte mit einem auf die Behälteröffnung aufzusetzenden Deckel mit integriertem Ausgießstutzen (10) und einer den Deckel umfassenden Dosierkappe (3) mit durch eine etwa axial verlaufende Trennwand (12) in eine Vordosierkammer (13), mit darin mündendem Ausgießstutzen und eine in eine Austrittsöffnung (15) mündende Austrittskammer (14) unterteiltem becherförmigen Innenraum, dadurch gekennzeichnet, daß der Deckel als in die Behälteröffnung hineinragende Dosierwanne (4) ausgebildet ist, welche einen die Behälteröffnung dichtend umfassenden Rand (5) mit Kupplungsmitteln (6, 7) und einen umlaufenden Bund (11) zur dichtenden Aufnahme der Dosierkappe (3) mit Dosierskala (28) aufweist, und daß im Randbleich der Dosierwanne (4) zur völligen Restleerung des Behälters (24) eine Ausbuchtung (9) ausgebildet ist, von welcher der Ausgießstutzen (10) ausgeht, und daß das Fassungsvermögen der Dosierwanne (4) mindestens ebenso groß ist wie dasjenige der Vordosierkammer (13).

2. Dosierverschluß nach Anspruch 1, dadurch gekennzeichnet, daß der Ausgießstutzen (10) mindestens etwa 1 mm in die Vordosierkammer (13) hineinragt.

3. Dosierverschluß nach einem der vorangehenden Ansprüche, dadurch gekennzeichnet, daß die Durchlaßquerschnitte von in der Dosierwanne (4) vorgesehenem Ausgießstutzen (10) und Austrittsöffnung (15) der Dosierkappe (3) in Abstimmung mit dem zu dosierenden Produkt im Sinne einer deutlich größeren Durchflußmenge an der Austrittsöffnung (15) als an dem Ausgießstutzen (10) ausgelegt sind.

4. Dosierverschluß nach einem der vorangehenden Ansprüche, dadurch gekennzeichnet, daß die im übrigen leicht konische, zylindrische Außenkontur (19) der Dosierkappe (3) im Bereich der Austrittskammer (14) beiderseits der Austrittsöffnung (15) unter Bildung einer schnutenförmigen Verengung (20, 21, 22) nach Art des Ausgießers einer Kanne eingezogen ist.

5. Dosierverschluß nach einem der vorangehenden Ansprüche, dadurch gekennzeichnet, daß die Austrittsöffnung (15) der Austrittskammer (14) mit Hilfe einer abzuschneidenden Membran (16) zu verschließen ist.

6. Dosierverschluß nach einem der vorangehenden Ansprüche, dadurch gekennzeichnet, daß die äußeren Wände der Dosierkappe (3) aus transparentem oder zumindest transluzentem Material bestehen.

7. Dosierverschluß nach einem der vorangehenden Anspüches, dadurch gekennzeichnet, daß die Dosierskala (28) auf der Trennwand (12) oder der Becherwand (18) mit einer Null-Linie am Kopf der Dosierkappe, d.h. am Becherboden (17), vorgesehen ist.

**Claims**

1. Metering closure, for containers for liquid or pourable products, with a cover, which is to be placed onto the container opening, with integrated pouring nipple (10) and a cap (3), which encompasses the cover, with beaker-shaped internal space subdivided by an about axially extending partition (12) into a preliminary metering chamber (13) with the pouring nipple opening therein and an exit chamber (14) opening into an exit opening (15), characterised thereby, that the cover is constructed as a metering trough (4), which projects into the container opening and displays a rim (5), which sealingly encompasses the container opening, with coupling means (6, 7) and an encircling collar (11) for the sealing reception of the metering cap (3) with metering scale (28), and that a bulge (9), from which the pouring nipple (10) goes out, is formed in the rim region of the metering trough (4) for the complete remnant emptying of the container (24), and that the holding capacity of the metering trough (4) is at least as great as that of the preliminary metering chamber (13).

2. Metering closure according to claim 1, characterised thereby, that the pouring nipple (10) projects by about at least 1 millimetre into the preliminary metering chamber (13).

3. Metering closure according to one of the preceding claims, characterised thereby, that the passage cross-sections of the pouring nipple (10) provided in the metering trough (4) and the exit opening (15) of the metering cap (3) are designed in accordance with the product to be metered in the sense of a clearly greater throughflow quantity at the exit opening (15) than at the pouring nipple (10).

4. Metering closure according to one of the preceding claims, characterised thereby, that the incidentally slightly conical, cylindrical external outline (19) of the metering cap (3) is drawn inwards in the region of the exit chamber (14) at both sides of the exit opening (15) while forming a snout-shaped constriction (20, 21, 22) in the manner of the pourer of a can.

5. Metering closure according to one of the preceding claims, characterised thereby, that the exit opening (15) of the exit chamber (14) is to be closed off with the aid of a membrane (16) that is to be cut off.

6. Metering closure according to one of the preceding claims, characterised thereby, that the outer walls of the metering cap (3) consist of transparent or at least translucent material.

7. Metering closure according to one of the preceding claims, characterised thereby, that a metering scale (28) with zero line at the head of the metering cap, i.e. at the beaker base (17), is provided on the partition (12) or the beaker wall (18).

**Revendications**

1. Bouchon doseur pour récipient à produits liquides ou coulants constitue d'un couvercle à fixer sur l'ouverture du récipient et pourvu d'une tubulure de versement (10) intégrée et d'un capuchon (3) entourant le couvercle et comportant un espace intérieur en forme de gobelet qui est subdivisé, par une paroi de séparation (12) située dans le même axe, en une chambre de prédosage (13), où la tubulure de versement débouche intérieurement, et une chambre d'évacuation (14) pourvue d'un orifice de sortie (15), ce bouchon doseur étant caractérisé par le fait que le couvercle est conçu sous forme d'un bac de dosage (4) plongeant dans l'ouverture du récipient et comportant un rebord (5) fermant hermétiquement cette ouverture par l'intermédiaire d'eléments d'accouplement (6, 7) et pourvu d'une collerette (11) périphérique, servant à la fermeture hermétique du capuchon doseur (3) comportant une échelle de dosage (28), ce bac de dosage (4) étant pourvu, dans sa zone périphérique et afin d'assurer le vidage complet du récipient (24) d'une enclave ou cavité (9) où prend naissance la tubulure de versement (10) la contenance de ce bac de dosage (4) étant prévue au moins égale à celle de la chambre de prédosage (13).

2. Bouchon doseur selon la revendication 1, caractérisé par le fait que la tubulure de versement (10) pénétre au moins d'un millimètre dans la chambre de prédosage (13).

3. Bouchon doseur selon l'une ou l'autre des revendications 1 ou 2, caractérisé par le fait que les sections de passage de la tubulure de versement (10) prévues dans le bac de dosage (4) et de l'orifice de sortie (15) du capuchon doseur sont adaptées en fonction du produit à doser, de façon que le débit de l'orifice de sortie (15) soit nettement supérieur à celui de la tubulure de versement (10).

4. Bouchon doseur selon l'une quelconque des revendications 1 à 3, caractérisé par le fait que le contour extérieur (19) du capuchon doseur (3), tout en étant cylindrique et également légèrement conique, à une forme incurvée dans sa partie correspondant à la chambre d'évacuation (14) des deux côtés de l'orifice (15) qui constitue un rétrécissement (20, 21, 22) en forme de bec à la manière d'un bec-verseur de broc.

5. Bouchon doseur selon l'une quelconque des revendications 1 à 4, caractérisé par le fait que l'orifice (15) de la chambre d'évacuation (4) est obturée à l'aide d'une membrane (16) à sectionner.

6. Bouchon doseur selon l'une quelconque des revendications 1 à 5, caractérisé par le fait que les parois extérieures du capuchon doseur (3) sont constituées en un matériau transparent ou au moins translucide.

7. Bouchon doseur selon l'une quelconque des revendications 1 à 6, caractérisé par le fait que, sur la paroi de séparation (12) ou sur la paroi (18) du capuchon doseur en forme de gobelet, est prévue une échelle de dosage (28) avec ligne de zéro située sur le sommet du capuchon, c'est-à-dire sur le fond (17) de la forme de gobelet.

Fig. 1

Fig. 2

Fig. 3

Fig. 4

Fig. 5